# EUROPEAN PATENT APPLICATION

(11) **EP 3 330 055 A1**
(43) Date of publication of application: **06.06.2018**
(21) Application number: 16201748.7
(22) Date of filing: 01.12.2016
(51) Int. Cl.: B29C 43/48, E04F 15/10, B29C 43/34, B29C 70/50, B29C 43/30, B32B 37/10, B32B 37/24, B32B 38/00, B32B 37/02, B32B 5/26, B29C 43/26, B32B 37/00, B29L 31/00, B29K 101/12, B29K 105/08, B29C 43/40, B29K 309/08

(54) **FLOOR TILE AND PROCESS FOR MANUFACTURING THEREOF**

(71) Applicant: Tarkett GDL S.A., 9779 Lentzweiler (LU)
(72) Inventor: SKALSKI, Marek, 9559 Wiltz (LU)
(74) Representative: Lavoix

(57) **Abstract**

A process for manufacturing floor tiles comprising the following steps:
- scattering granules (62) of a thermoplastic material on a conveying member (52) in order to obtain a first layer of granules (64),
- superimposing several sheets (5B, 5C) in order to obtain a plurality of adjacent sheets on the first layer of granules (64), each of the sheets containing at least 50 wt% of glass fibers,
- scattering granules (70) of a thermoplastic material on the uppermost sheet (5B) in order to obtain a second layer of granules (72),
- pressing and heating the first layer of granules, the plurality of adjacent sheets and the second layer of granules,
- melting or at least softening the first layer of granules and the second layer of granules, the plurality of sheets being at least partly impregnated by the thermoplastic material of the first layer of granules and of the second layer of granules in order to obtain a core layer after cooling, and
- using the core layer to produce at least a slab, and using the slab to obtain the floor tiles.

## Description

The present invention deals with a process for manufacturing floor tiles, the process comprising using a pressing system, for example a double-belt press, in order to obtain a core layer having at least one thermoplastic material, using the core layer to produce slabs, and using the slabs to obtain the floor tiles.

The invention also deals with floor tiles which can be manufactured by such a process.

In order to obtain floor tiles, it is well known to first produce laminated slabs, by calendering or by using a double belt press.

A double belt press has at least a first belt on which granules of at least one thermoplastic material are scattered. The press allows pressing and heating the granules between the first belt and a second belt of the press in order to transform the granules into a core layer of the slab. Other layers are then added on the core layer to produce the slab, which is usually cut to obtain the tiles.

In order to reinforce the core layer of the slab, a reinforcement layer is sometimes added in the core layer. This can be performed by applying a sheet of glass fibers on a first layer of granules, scattering a second layer of granules on the sheet, and then hot pressing this set in the double belt press.

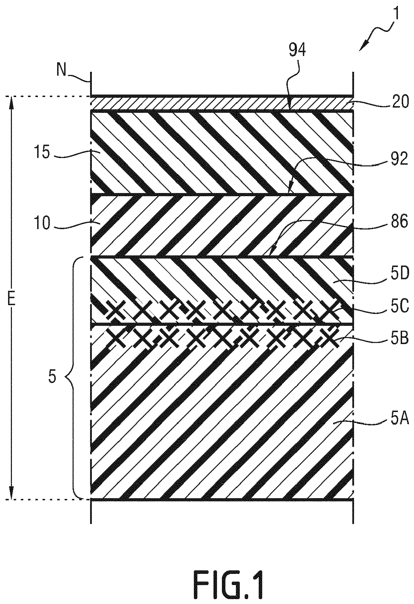

For example EP-A-2 615 221 discloses implementing two reinforcement layers 19, 20 located at a distance of each other within the core layer along the tile thickness direction, respectively at two levels corresponding to two locking tabs used to interconnect adjacent tiles (figure 1).

The skilled person perfectly knows how to tune the double belt press in order to obtain a core layer with a reinforcing layer, or several spaced apart ones. However, it has been noticed that, sometimes, large air bubbles are present within the obtained tiles, to the extent that the quality of the tiles is affected. Bubbles tend to appear on the surface of the core layer, causing a formation of "holes" about 2 to 3 mm wide, and a potential degradation of the conveyer belt of the double belt press.

An aim of the invention is to provide a process for manufacturing a floor tile with an improved quality.

To this end, the invention proposes a process according to claim 1

In other embodiments, the process comprises one or several of the features corresponding to claims 2 to 10, taken in isolation or any technically feasible combination.

The invention also relates to a floor tile according to claim 11.

In other embodiments, the floor tile comprises one or several of the features corresponding to claims 12 to 15, taken in isolation or any technically feasible combination.

In a particular embodiment, the floor tile is obtained using a process as described above.

The invention and its advantages will be better understood upon reading the following description, given solely by way of example and with reference to the appended drawings, in which:
- Figure 1 is a schematic cross-sectional view of a floor tile according to the invention,
- Figure 2 is a schematic view of an installation implementing a process according to the invention,
- Figure 3 is schematic view of the pressing system represented on Figure 2, and
- Figures 4 and 5 are schematic views of two variants of the pressing system represented on Figures 2 and 3.

With reference to Figure 1, a floor tile 1 is described.

The floor tile 1 has a thickness E along a direction N perpendicular to the floor tile. The floor tile 1, in view along the direction N, may have any shape allowing paving a floor (not represented): rectangular, square, triangular, hexagonal...etc. The floor tile 1 is intended to be applied on the floor adjacent to other tiles (not represented) having the same shape or composition, or different ones. Advantageously the floor tile 1 includes locking tabs (knows in themselves and not represented) enabling to connect it to adjacent tiles.

Successively in the direction N, the floor tile 1 comprises a core layer 5, a printed film 10 located on an upper surface of the core layer, a wear layer 15 located on an upper surface of the printed film, and optionally a PU layer 20 located on an upper surface of the wear layer.

The core layer 5 comprises a first layer 5A of thermoplastic material, a plurality of adjacent superimposed sheets 5B, 5C, and a second layer 5D of thermoplastic material successively along the direction N.

The thermoplastic material of the first layer 5A and of the second layer 5D may be of the same nature.

The plurality of adjacent sheets 5B, 5C is sandwiched between, and at least partly impregnated by the first layer 5A and the second layer 5D.

Each of the sheets 5B, 5C contain at least 50 wt% of glass fibers, advantageously more than 80 wt%. Advantageously, they are made of glass fibers. For example, they are fleeces of glass fibers, that is to say non-woven.

As a variant, the glass fibers are woven.

In the example, the sheets 5B, 5C have the same composition, structure and thickness.

Each of the sheets 5B, 5C for example has a thickness comprised between 400 and 500 µm.

As variants (not shown), the sheets 5B, 5C may differ from each other in terms of composition, structure or thickness.

Such sheets are for example commercially available from Johns Manville under the reference SH35/3, and from Saint Gobain Adfors under the reference U35.

The sheets 5B, 5C are in contact with each other. This means that no thermoplastic material is to be found in between them along the direction N, except material resulting from an impregnation of the adjacent sheets during manufacturing.

As a variant (also not shown), there may be more than two adjacent sheets in said plurality.

The first layer 5A, the second layer 5D, and the printed film 10 may include PVC (polyvinyl chloride), a plasticizer, a stabilizer, and a filler.

The printed film 10 provides a decoration of the floor tile 1.

The wear layer 15 may include PVC (Polyvinyl chloride), a plasticizer, and a stabilizer. The wear layer 15 is transparent and is supposed to progressively wear during the life time of the floor tile 1.

PU stands for polyurethane.

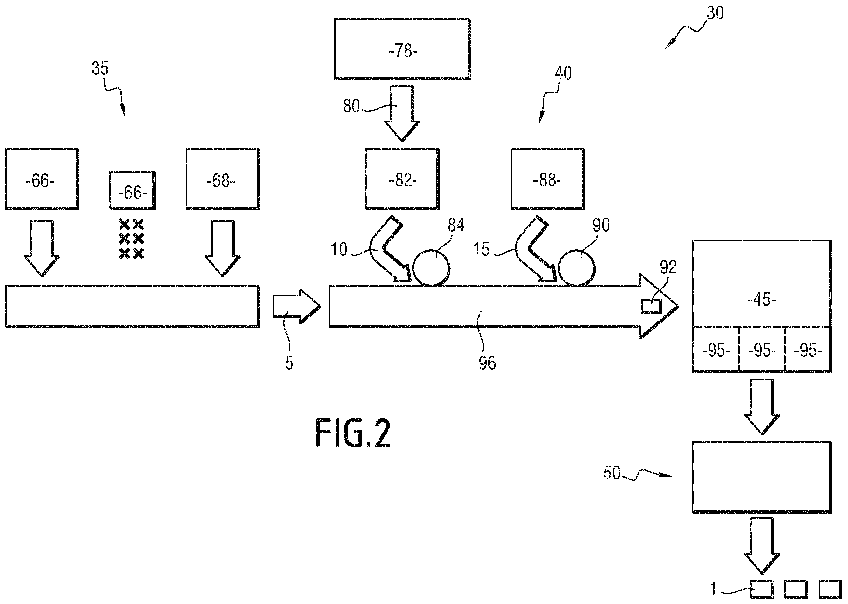

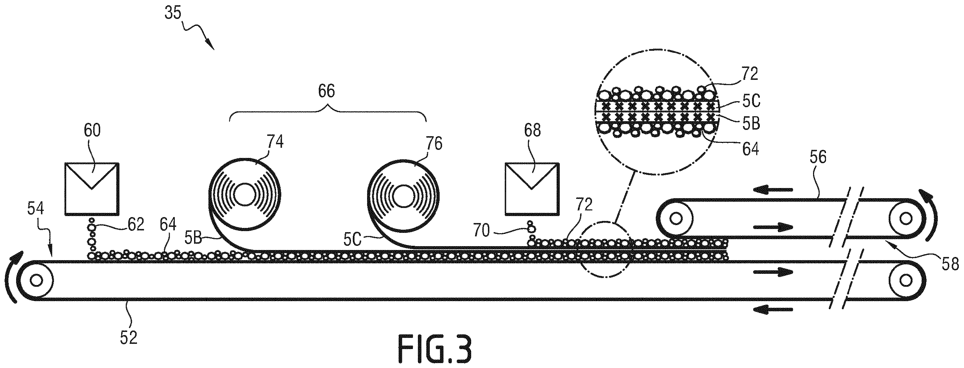

With reference to Figures 2 and 3, an installation 30 for producing the floor tile 1 (and many others) will be described.

The installation 30 comprises a pressing system 35 (also show in Figure 3) providing the core layer 5, a lamination line 40 for obtaining slabs 45, and a finishing line 50 for obtaining floor tiles such as the floor tile 1.

The pressing system 35 is for example a double belt press. The pressing system 35 comprises a conveying member 52 which is advantageously a first belt of the double-belt press and has an upper face 54 adapted for carrying the components of the core layer 5. The pressing system comprises a second belt 56 having a lower face 58 facing the upper face 54. The pressing system 35 also comprises a unit 60 for scattering granules 62 and obtaining a first layer of granules 64 on the conveying member 52, a unit 66 for superimposing the sheets 5B, 5C on the first layer of granules, and a unit 68 for scattering granules 70 and obtaining a second layer of granules 72 on the conveying member 52.

The pressing system 35 is adapted for pressing perpendicularly to the first layer of granules 64 and the second layer of granules 72.

The pressing system 35 is for example known as Thermofix®.

By "double belt press", it is for example meant a press having at least two belts able to convey and press the components of the core layer 5. In variants (not shown), one of or both the conveying member 52 and the second belt 56 may be replaced by several belts having the same function as the replaced belts. In other words, a "double belt press" is advantageously not limited to a press strictly having only two belts.

As a variant (not shown), the conveying member 52 is a belt which is distinct from the pressing belts of the double-belt press.

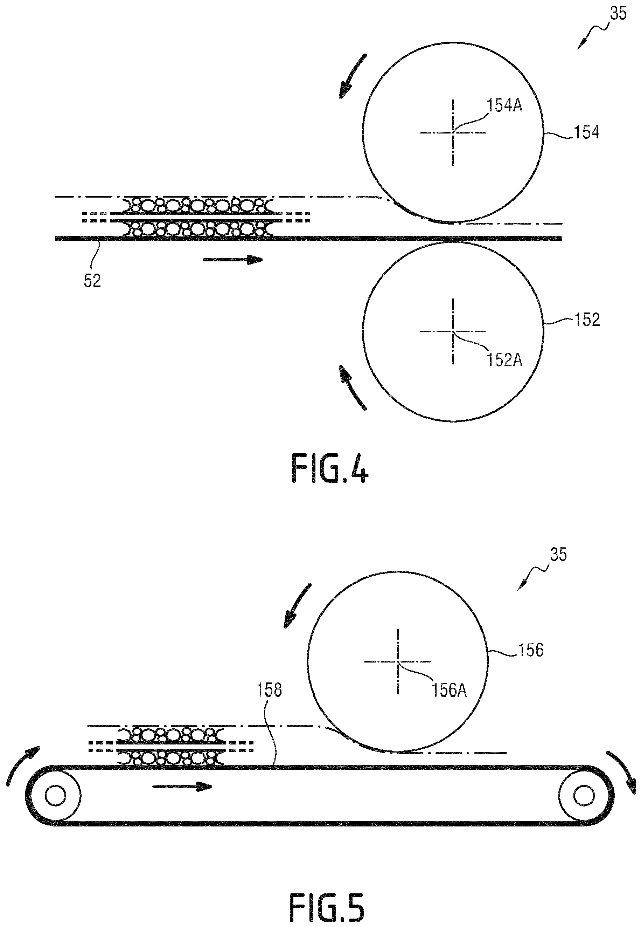

As a variant shown in Figure 4, the pressing system 35 comprises two rotating cylinders 152, 154 having parallel axes 152A, 154A. The conveying member 52 is for example a release band of paper and is adapted to convey the first layer of granules 64, the sheets 5B, 5C and second layer of granules 72 between the cylinders152, 154 for pressing. In this case, the band of paper is not intended to remain the finished floor tile 1.

According to another variant shown in Figure 5, the pressing system 35 comprises a rotating cylinder 156, and a conveying belt 158. The belt 158 and the conveying member 52 may advantageously be a same belt. The cylinder 156 has an axis 156A parallel to the surface of the belt 158. The cylinder 156 and the belts 158 are configured to press the first layer of granules 64, the sheets 5B, 5C and second layer of granules 72.

For simplicity, the units 66, 68 are not represented on Figures 4 and 5.

As shown in Figure 3, the unit 66 comprises two systems 74, 76, known in themselves, for respectively unwinding the sheets 5B, 5C and guiding them towards the first layer of granules 64.

The system 76 is adapted for applying the sheet 5C directly on the sheet 5B.

The upper face 54 and the lower face 58 are configured to run at the same speed in order to convey and compress the first layer of granules 64, the superimposed sheets 5B, 5C and the second layer of granules 72.

The pressing system 35 also includes systems (not represented and well known in themselves) adapted to heat and cool off the first layer of granules 64 and the second layer of granules 72, as well as to adjust the thickness of the core layer 5.

The laminating line 40 (Figure 2) is also known in itself. The laminating line 40 comprises a unit 78 for providing a film 80, a unit 82 for printing on the film 80 in order to obtain the printed film 10, and a system 84 for adhering the printed film 10 on an upper face 86 (Figure 1) of the core layer 5. The laminating line 40 comprises a unit 88 for providing the wear layer 15, and a system 90 for adhering the wear layer 15 on an upper face 92 of the printed film. The laminating line 40 also comprises a system 92 for adhering the PU layer 20 on an upper face 94 of the wear layer 15, and a conveying system 96 for carrying the core layer 5 with the progressively added above mentioned layers.

By "adhering", it is meant that a layer is applied on and made adherent to a lower layer.

The units 82 and 88 are for example four cylinder calenders adapted to deliver and apply the printed film 10 and the wear layer 15 respectively.

The finishing line 50 is adapted for cutting the slabs 45 into parts 95 having a predetermined shape, and optionally:
- beveling the parts, and/or
- providing at least two opposite edges of the parts with a connecting system, for example by milling operations, and/or
- applying an adhesive (not represented) on the parts,
in order to obtain the floor tiles 1.

The operation of the installation 30 stems from its structure and will now be described.

The pressing system 35 advantageously works in a continuous manner. The unit 60 scatters the granules 62 in order to obtain the first layer of granules 64 on the upper face 54 of the conveying member 52.

The conveying member 52 carries the first layer of granules 64 under the system 74 which unwinds the sheet 5B and applies it on the first layer of granules.

The conveying member 52 carries the first layer of granules 64 and the sheet 5B under the system 76 which unwinds the sheet 5C and applies it directly on the sheet 5B.

The conveying member 52 carries the first layer of granules 64 and the plurality of sheets 5B, 5C under the unit 68 which scatters the granules 70 on the sheet 5C in order to obtain the second layer of granules 72.

Then the set of superimposed layers is pressed between the conveying member 52 and the second belt 56. The set is also heated in order to at least partially melt the first layer of granules 64 and the second layer of granules 72. As a result, the sheets 5B, 5C, while remaining in contact with each other, are impregnated at least partly by the molten layers of granules.

The pressing system 35 also sets the required thickness of the core layer 5 which is obtained at an outlet of the press.

The variants shown in Figures 4 and 5 function similarly, except that the set of superimposed layers is pressed between the cylinders 152, 154 (Figure 4) or between the belt 158 and the cylinder 156 (Figure 6).

Then the bare core layer 5 enters the laminating line 40 (figure 2).

The unit 78 provides the film 80 which is printed by unit 82 in order to obtain the printed film 10. The system 84 adheres the printed film 10 on the upper face 86 of the core layer 5.

Similarly, the unit 88 provides the wear layer 15 and the system 90 adheres it on the upper face 92 (figure 1) of the printed film 15.

The unit 92 applies the PU layer 20 on the upper face 94 of the wear layer 15.

The slabs 45 are obtained by cutting the product continuously exiting the laminating line 40. The slabs 45 have the laminated structure of the floor tile 1.

The slabs 45 then enter the finishing line 50, where they are cut to the required dimensions and beveled in order to obtain floor tiles. Advantageously at least two opposite edges of the tiles are milled to create connecting systems (not represented). Optionally an adhesive (not represented) is applied on the back side of the tile 1, for installation of the tile.

Thanks to the above mentioned features, in particular the fact that a plurality of adjacent superimposed sheets containing at least so wt% of glass fibers is used, the floor tile 1 has no air bubbles having a size that would damage their quality. The above mentioned manufacturing process is also simple and cost effective.

## Claims

1. A process for manufacturing floor tiles (1), the process comprising the following steps:
- scattering granules (62) of a thermoplastic material on a conveying member (52) in order to obtain a first layer of granules (64),
- superimposing several sheets (5B, 5C) on the first layer of granules (64) in order to obtain a plurality of adjacent sheets (5B, 5C) on the first layer of granules (64), said plurality having an uppermost sheet (5B), each of the sheets containing at least 50 wt% of glass fibers,
- scattering granules (70) of a thermoplastic material on said uppermost sheet (5B) in order to obtain a second layer of granules (72),
- pressing and heating the first layer of granules (64), the plurality of adjacent sheets (5B, 5C) and the second layer of granules (72),
- melting or at least softening the first layer of granules (64) and the second layer of granules (72), the plurality of sheets (5B, 5C) being at least partly impregnated by the thermoplastic material of the first layer of granules (64) and by the thermoplastic material of the second layer of granules (72) in order to obtain a core layer (5) after cooling, and
- using the core layer (5) in order to produce at least a slab (45), and using the slab (45) to obtain the floor tiles (1).

2. The process according to claim 1, wherein the step of pressing includes pressing the first layer of granules (64), the plurality of adjacent sheets (5B, 5C) and the second layer of granules (72) in a double-belt press.

3. The process according to claim 2, wherein the conveying member (52) is a belt of the double-belt press.

4. The process according to claim 1, wherein the step of pressing includes pressing the first layer of granules (64), the plurality of adjacent sheets (5B, 5C) and the second layer of granules (72) between:
- at least two cylinders (152, 154) having parallel axes (152A, 154A), or
- at least one cylinder (156) and at least a belt (158).

5. The process according to any of claims 1 to 4, wherein the plurality of adjacent sheets (5B, 5C) comprises at least two structurally analogous sheets (5B, 5C).

6. The process according to any of claims 1 to 5, wherein the plurality of adjacent sheets (5B, 5C) consists of two sheets (5B, 5C).

7. The process according to claim 6, wherein said two sheets (5B, 5C) are fiber glass fleeces.

8. The process according to any of claims 1 to 7, wherein superimposing several sheets (5B, 5C) on the first layer of granules (64) includes unwinding said sheets (5B, 5C), and guiding the unwound sheets (5B, 5C) towards the first layer of granules (64).

9. The process according to any of claims 1 to 8, wherein using the core layer (5) to produce at least a slab (45) includes:
- adhering a printed film (10) on the core layer (5),
- adhering a wear layer (15) on the printed film (10), and
- adhering applying a PU layer (20) on the wear layer (15).

10. The process according to any of claims 1 to 9, wherein using the slab (45) to obtain the floor tiles (1) includes:
- cutting the slabs (45) in order to obtain parts (95) having predetermined dimensions, and
- optionally beveling said parts (95).

11. Floor tile (1) having a core layer (5), wherein the core layer (5) comprises:
- a plurality of adjacent superimposed sheets (5B, 5C), each of the sheets (5B, 5C) containing at least 50 wt% of glass fibers,
- a first layer (5A) of thermoplastic material, and
- a second layer (5B) of thermoplastic material,
wherein said plurality of adjacent superimposed sheets (5B, 5C) is sandwiched between, and at least partly impregnated by the first layer (5A) and the second layer (5B).

12. The floor tile according to claim 11, wherein the plurality of adjacent sheets (5B, 5C) comprises at least two structurally analogous sheets (5B, 5C).

13. The floor tile (1) according to claim 11 or 12, wherein the plurality of adjacent sheets (5B, 5C) consists of two sheets (5B, 5C).

14. The floor tile (1) according to claim 13, wherein said two sheets (5B, 5C) are fiber glass fleeces.

15. The floor tile (1) according to any of claims 11 to 14, further successively comprising:
- a printed film (10) located on the core layer (5),
- a wear layer (15) on the printed film (10), and
- optionally a PU layer (20) on the wear layer (15).

## Amended claims

### Amended claims in accordance with Rule 137(2) EPC.

1. A process for manufacturing floor tiles (1), the process comprising the following steps:
- scattering granules (62) of a thermoplastic material on a conveying member (52) in order to obtain a first layer of granules (64),
- superimposing several sheets (5B, 5C) on the first layer of granules (64) in order to obtain a plurality of adjacent sheets (5B, 5C) on the first layer of granules (64), said plurality having an uppermost sheet (5B), each of the sheets containing at least 50 wt% of glass fibers,
- scattering granules (70) of a thermoplastic material on said uppermost sheet (5B) in order to obtain a second layer of granules (72),
- pressing and heating the first layer of granules (64), the plurality of adjacent sheets (5B, 5C) and the second layer of granules (72),
- melting or at least softening the first layer of granules (64) and the second layer of granules (72), the plurality of sheets (5B, 5C) being at least partly impregnated by the thermoplastic material of the first layer of granules (64) and by the thermoplastic material of the second layer of granules (72) in order to obtain a core layer (5) after cooling, and
- using the core layer (5) in order to produce at least a slab (45), and using the slab (45) to obtain the floor tiles (1).

2. The process according to claim 1, wherein the step of pressing includes pressing the first layer of granules (64), the plurality of adjacent sheets (5B, 5C) and the second layer of granules (72) in a double-belt press.

3. The process according to claim 2, wherein the conveying member (52) is a belt of the double-belt press.

4. The process according to claim 1, wherein the step of pressing includes pressing the first layer of granules (64), the plurality of adjacent sheets (5B, 5C) and the second layer of granules (72) between:
- at least two cylinders (152, 154) having parallel axes (152A, 154A), or
- at least one cylinder (156) and at least a belt (158).

5. The process according to any of claims 1 to 4, wherein the plurality of adjacent sheets (5B, 5C) comprises at least two structurally analogous sheets (5B, 5C).

6. The process according to any of claims 1 to 5, wherein the plurality of adjacent sheets (5B, 5C) consists of two sheets (5B, 5C).

7. The process according to claim 6, wherein said two sheets (5B, 5C) are fiber glass fleeces.

8. The process according to any of claims 1 to 7, wherein superimposing several sheets (5B, 5C) on the first layer of granules (64) includes unwinding said sheets (5B, 5C), and guiding the unwound sheets (5B, 5C) towards the first layer of granules (64).

9. The process according to any of claims 1 to 8, wherein using the core layer (5) to produce at least a slab (45) includes:
- adhering a printed film (10) on the core layer (5),
- adhering a wear layer (15) on the printed film (10), and
- adhering applying a PU layer (20) on the wear layer (15).

10. The process according to any of claims 1 to 9, wherein using the slab (45) to obtain the floor tiles (1) includes:
- cutting the slabs (45) in order to obtain parts (95) having predetermined dimensions, and
- optionally beveling said parts (95).

11. Floor tile (1) having a core layer (5), wherein the core layer (5) comprises:
- a first layer (5A) of thermoplastic material, and
- a second layer (5B) of thermoplastic material,
**characterized in that** the core layer (5) further comprises a plurality of adjacent superimposed sheets (5B, 5C), each of the sheets (5B, 5C) containing at least 50 wt% of glass fibers, said plurality of adjacent superimposed sheets (5B, 5C) being sandwiched between, and at least partly impregnated by the first layer (5A) and the second layer (5B).

12. The floor tile according to claim 11, wherein the plurality of adjacent sheets (5B, 5C) comprises at least two structurally analogous sheets (5B, 5C).

13. The floor tile (1) according to claim 11 or 12, wherein the plurality of adjacent sheets (5B, 5C) consists of two sheets (5B, 5C).

14. The floor tile (1) according to claim 13, wherein said two sheets (5B, 5C) are fiber glass fleeces.

15. The floor tile (1) according to any of claims 11 to 14, further successively comprising:
- a printed film (10) located on the core layer (5),
- a wear layer (15) on the printed film (10), and
- optionally a PU layer (20) on the wear layer (15).
